# EUROPÄISCHE PATENTANMELDUNG

(11) **EP 1 400 310 A1**
(43) Veröffentlichungstag der Anmeldung: **24.03.2004**
(21) Anmeldenummer: 03020034.9
(22) Anmeldetag: 04.09.2003
(51) Int. Cl.: B23Q 17/20, B23Q 17/09, B21J 15/28, B21J 15/10

(54) **Verfahren und Vorrichtung zur Eindringtiefenermittlung**

(30) Priorität: 19.09.2002 DE 10243651
(71) Anmelder: CLAAS Fertigungstechnik GmbH, 48361 Beelen (DE)
(72) Erfinder: Herrmann, Günther, 33335 Gütersloh (DE)

(57) **Zusammenfassung**

Die Erfindung betrifft ein Verfahren zur Ermittlung der Eindringtiefe (Y1, Y2) eines Bearbeitungswerkzeuges (7) in Gegenstände (15), wobei die Strecke gemessen wird, auf welcher dem Bearbeitungswerkzeug (7) während seiner Vorschubbewegung in den zu bearbeitenden Gegenstand (15) ein von diesem erzeugter Widerstand (F) entgegengesetzt wird.

Damit wird ein einfach umsetzbares und sicher arbeitendes Verfahren zur Ermittlung der Eindringtiefe (Y1, Y2) eines Bearbeitungswerkzeugs (7) in einen zu bearbeitenden Gegenstand (15) geschaffen. Ein solches Verfahren ist insbesondere deshalb sehr sicher, da an dem Bearbeitungswerkzeug (7) nur solange schnittkraftbedingte Belastungen (F) auftreten, solange das Bearbeitungswerkzeug (7) Material von dem zu bearbeitenden Gegenstand (15) abträgt.

## Beschreibung

Die Erfindung betrifft ein Verfahren zur Ermittlung der Eindringtiefe eines Bearbeitungswerkzeuges in Gegenstände gemäß dem Oberbegriff des Anspruchs 1 und eine Vorrichtung zur Durchführung dieses Verfahrens.

Vor allem in der Luftfahrt werden aus Gewichtsgründen, beispielsweise für die Herstellung von Rümpfen, Leitwerksschalen und dergleichen immer häufiger Kohlefaserplatten eingesetzt, die miteinander durch Klebung fixiert und nahezu immer zur Sicherung zusätzlich vernietet werden. Je nach Größe eines Flugzeuges können mehrere tausend Nietungen erforderlich sein, um insbesondere die schalenförmigen Außenhautteile eines Flugzeuges miteinander zu verbinden. Diese sehr hohe Menge an benötigten Nieten spielt hinsichtlich des Gewichtes eine nicht unbedeutende Rolle. Aus diesem Grund ist man bemüht, die Nietschaftlänge der Nieten gerade so lang zu wählen, wie dies hinsichtlich der Anpress- und Querkräfte unter Berücksichtigung der Stärke der miteinander zu verbindenden Platten erforderlich ist. Werden als Materialien beispielsweise Aluminiumplatten eingesetzt, so kann summarisch die Gesamtmaterialstärke ermittelt werden, weil Aluminiumbleche in ihrer Stärke kaum nennenswerte Toleranzen aufweisen. Kohlefaserplatten hingegen weisen in ihrer Stärke bekanntermaßen sehr große Toleranzen auf. Die exakte Bohrlochtiefe eines Materialverbundes, bestehend beispielsweise aus Kohlefaserplatten, die miteinander durch leimen fixiert sind, lässt sich demnach summarisch nicht ermitteln, da die Bohrtiefe auch maßgeblich davon abhängt, wie dick das Klebemittel zwischen den zu verbindenden Teilen aufgetragen wurde und welche Restdicke es nach dem Aushärten aufweist. Dies bedeutet, dass die Tiefe jeder Bohrung separat gemessen und jeder Bohrung ein Niet mit entsprechender Schaftlänge zugeordnet werden muss, um die hohen Anforderungen nach möglichst geringem Gewicht erfüllen zu können.

Der Erfindung liegt nun die Aufgabe zugrunde, ein Verfahren und eine Vorrichtung aufzuzeigen, mit dem die Eindringtiefe eines Bearbeitungswerkzeuges in einen Gegenstand auf einfache Weise ermittelt werden kann.

Erfindungsgemäß wird die Aufgabe durch ein Verfahren zur Ermittlung der Eindringtiefe mit den kennzeichnenden Merkmalen des Anspruchs 1 gelöst.

Indem die Strecke gemessen wird, auf welcher dem Bearbeitungswerkzeug während seiner Vorschubbewegung in den zu bearbeitenden Gegenstand ein von diesem erzeugter Widerstand entgegengesetzt wird, wird ein einfach umsetzbares und sicher arbeitendes Verfahren zur Ermittlung der Eindringtiefe eines Bearbeitungswerkzeugs in einen zu bearbeitenden Gegenstand geschaffen. Ein solches Verfahren ist insbesondere deshalb sehr sicher, da an dem Bearbeitungswerkzeug nur solange schnittkraftbedingte Belastungen auftreten, solange das Bearbeitungswerkzeug Material von dem zu bearbeitenden Gegenstand abträgt. Hat das Bearbeitungswerkzeug den Bearbeitungsgegenstand durchdrungen, treten an dem Bearbeitungswerkzeug nur noch reibkraftbedingte Belastungen auf, die jedoch erheblich geringer sind, sodass in Abhängigkeit von den hohen Belastungen beim Eindringen des Bearbeitungswerkzeugs in den zu bearbeitenden Gegenstand sehr präzise die Eindringtiefe oder die Materialstärke bestimmt werden kann.

Eine besonders effiziente Umsetzung des Verfahrens ergibt sich dann, wenn in Abhängigkeit von der gemessenen, gegen den Materialwiderstand zurückgelegten Strecke des Bearbeitungswerkzeuges Eindringtiefensignale und/oder Materialdickensignale generiert werden.

Eine vorteilhafte Weiterbildung des erfindungsgemäßen Verfahrens ergibt sich dann, wenn die Eindringtiefensignale und/oder Materialdickensignale als Eingangssignale für weitere Prozesse zur Verfügung stehen. Auf diese Weise wird es zum Beispiel möglich, die Eindringtiefensignale und/oder Materialdickensignale zu visualisieren, wobei die Visualisierung im einfachsten Fall darin bestehen kann, dass die von dem Bearbeitungswerkzeug bearbeitete Stelle des bearbeiteten Gegenstandes eine druck- oder spritztechnisch erzeugte Markierung erhält, aus der die entsprechende Eindringtiefe oder Materialstärke hervorgeht.

Eine besonders einfache Ausführung ergibt sich dann, wenn die Bearbeitungswerkzeuge als Bohrer oder Fräser ausgeführt sind.

Aufgrund der präzisen und technisch relativ einfachen Bestimmung des Eindringwiderstandes des Bearbeitungswerkzeugs, kann das erfindungsgemäße Verfahren insbesondere sehr effizient dort eingesetzt werden, wo der zu bearbeitende Gegenstand ein Materialverbund ist, dessen einzelnen Materialen miteinander verklebt sind, wobei der Materialverbund aus metallischen und nichtmetallischem Material aufgebaut sein kann.

Da beim Durchdringen eines Materialverbundes die Belastungen am Bearbeitungswerkzeug maßgeblich von der Struktur des jeweiligen Verbundmaterials bestimmt werden und im Bereich einer Klebemittelschicht erheblich niedriger sind als beispielsweise im Bereich von metallischen Werkstoffen oder Kohlefaserschichten ist in einer vorteilhaften Weiterbildung des erfindungsgemäßen Verfahrens vorgesehen, dass Belastungsschwankungen während der Bewegung des Bearbeitungswerkzeugs durch den zu bearbeitenden Gegenstand unberücksichtigt bleiben.

In vorteilhafter Weiterbildung der Erfindung wird das während der Vorschubbewegung des Bearbeitungswerkzeugs durch den zu bearbeitenden Gegenstand generierte, die Bohrlochtiefe oder die Materialdicke beschreibende Signal zur Auswahl von Verbindungselementen herangezogen, die die von dem Bearbeitungswerkzeug geschaffenen Vertiefungen oder Durchgangsöffnungen durchsetzen sollen. Auf diese Weise wird sichergestellt, dass die Verbindungselemente nur so lang sind, wie in Abhängigkeit von der zu durchsetzenden Öffnung erforderlich ist. Dies hat insbesondere den Vorteil, dass die Masse der Verbindungselemente niedrig gehalten werden kann.

Eine besonders einfache Anwendung ergibt sich dann, wenn die Verbindungselemente als Niete ausgeführt sind und die während der Vorschubbewegung des Bearbeitungswerkzeugs generierten Signale die Bohrlochtiefe repräsentieren und das nach diesen Signalen die Nietschaftlänge ausgewählt wird.

Eine vorteilhafte Weiterbildung des erfindungsgemäßen Verfahrens ergibt sich dann, wenn das während des Vorschubs des Bearbeitungswerkzeuges durch den zu bearbeitenden Gegenstand generierte Signal ein Maß für den Verschleiß des Bearbeitungswerkzeuges bildet. So kann auf einfache Weise sichergestellt werden, dass ein verschleißbedingter Werkzeugwechsel rechtzeitig erfolgt.

Eine besonders vorteilhafte Weiterbildung des erfindungsgemäßen Verfahrens ergibt sich dann, wenn das während des Vorschubs des Bearbeitungswerkzeuges durch den zu bearbeitenden Gegenstand generierte Signal unmittelbar auf die Vorschubgeschwindigkeit oder die Drehzahl des Bearbeitungswerkzeugs Einfluss nimmt. Dies hat den Vorteil, dass die Schnittgeschwindigkeit des Bearbeitungswerkzeugs optimal an den jeweils gerade zu bearbeitenden Werkstoff angepasst werden kann.

Messtechnisch kann die Ermittlung der lastabhängigen Signale besonders einfach mittels sogenannter Piezzo-Sensoren umgesetzt werden. Derartige Sensoren weisen hohe Messgenauigkeiten auf und sind einfach in die jeweiligen Bearbeitungswerkzeuge zu integrieren.

Eine besonders rationelle und flexible Umsetzung des erfindungsgemäßen Verfahrens wird dann erreicht, wenn die ein Bearbeitungswerkzeug aufnehmende erfindungsgemäße Bearbeitungsmaschine einem Bearbeitungs- und Montageroboter zugeordnet ist und die Steuer- und Auswerteinheit Ausgangssignale generiert, die eine selbsttätige Entnahme von Verbindungselementen und/oder Bearbeitungswerkzeugen aus Vorratsmagazinen zulässt.

Weitere vorteilhafte Ausgestaltungen sind Gegenstand weiterer Unteransprüche und werden nachfolgend an Hand von Zeichnungen näher erläutert.

Es zeigen
- Figur 1: eine schematische Darstellung des erfindungsgemäßen Verfahrens
- Figur 2: eine graphische Darstellung der ermittelten Spannungssignale in Abhängigkeit von der Messzeit
- Figur 3: eine schematische Darstellung einer nach dem erfindungsgemäßen Verfahren arbeitenden Bearbeitungs- und Montagezelle

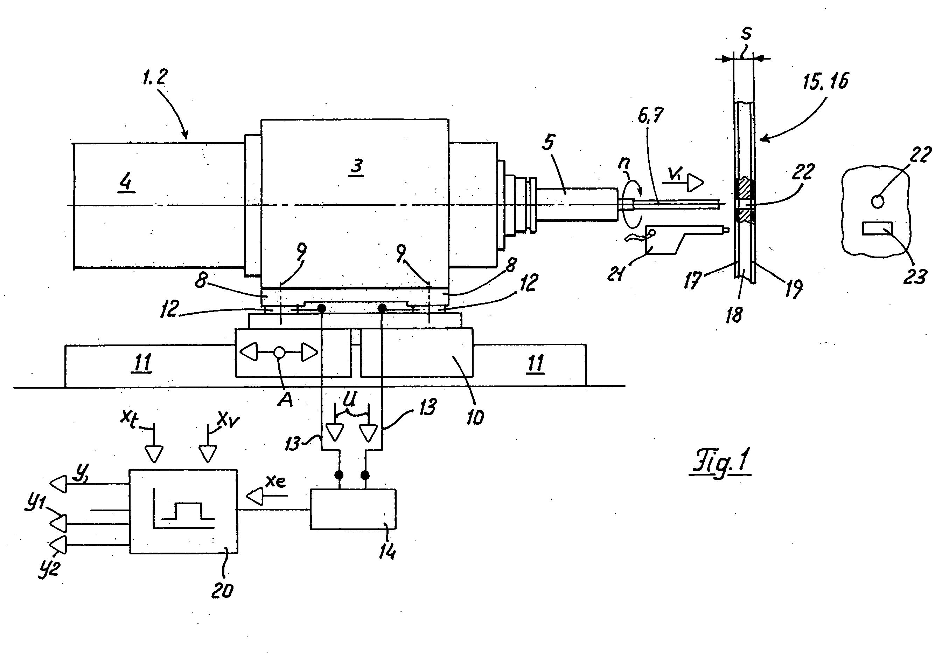

Zur Erläuterung des erfindungsgemäßen Verfahrens zeigt Figur 1 schematisch eine als Bohreinheit 1 ausgeführte Bearbeitungsmaschine 2. Die Bohreinheit 1 wird von einem ein nicht näher dargestelltes Getriebe aufnehmenden Gehäuse 3 gebildet, dem einenends ein Antriebsmotor 4 angeflanscht ist. Anderenends ist dem Gehäuse 3 ein Spannfutter 5 zugeordnet, welches im dargestellten Ausführungsbeispiel ein als Bohrer 6 ausgeführtes Bearbeitungswerkzeug 7 aufnimmt. Untenseitig sind dem Gehäuse 3 Flanschflächen 8 angeformt, die über eine Vielzahl von Schraubverbindungen 9 die Bohreinheit 1 mit einem Führungsschlitten 10 verbinden, wobei der Führungsschlitten 10 in an sich bekannter Weise auf einer oder mehreren Führungsbahnen 11 gemäß Pfeilrichtung A horizontal verschiebbar angeordnet ist. Zur Durchführung des erfindungsgemäßen Verfahrens lagern die Flanschflächen 8 des Gehäuses 3 der Bohreinheit 1 im Bereich der Schraubverbindungen 9 auf Piezzo-Sensoren 12, die über ein elektrisches Leitungssystem 13 zunächst mit zumindest einer Signalverstärkereinheit 14 verbunden sind.

Im Bereich des Bearbeitungswerkzeugs 7 ist diesem der zu bearbeitende Gegenstand 15 ortsfest zugeordnet. Im dargestellten Ausführungsbeispiel ist der zu bearbeitende Gegenstand 15 als Verbundmaterial 16 ausgeführt, wobei das Verbundmaterial 16 beispielhaft aus drei Schichten 17-19 aufgebaut ist. Erfindungsgemäß können die Schichten 17-19 des Verbundmaterials 16 aus metallischen und/oder nichtmetallischen Werkstoffen bestehen. Denkbar wäre es zum Beispiel, dass die äußeren Schichten 17, 19 metallische oder nichtmetallische Werkstücke sind, die durch Kleben miteinander verbunden sind, sodass die mittlere Schicht 18 des Verbundmaterials 16 das Klebemittel verkörpert.

Wird nun die Bohreinheit 1 auf der Führungsbahn 11 in Richtung des zu bearbeitenden Gegenstandes 15 verschoben setzt das Bearbeitungswerkzeug 7 ab einer bestimmten Position der Bohreinheit 1 auf dem zu bearbeitenden Gegenstand 15 auf und durchdringt diesen sofern die Bohreinheit 1 weiter in Richtung des zu bearbeitenden Gegenstandes 15 bewegt wird. Während dieser Vorschubbewegung des Bohrers 6 durch den zu bearbeitenden Gegenstand 15 wird aus diesem durch den Bohrer 6 Material entfernt. Die dabei von dem Bohrer 6 zu überwindenden Widerstände, die in aller Regel ein Maß für die auftretenden Schnittkräfte sind, werden von den Piezzo-Sensoren 12 erfasst und generieren in Abhängigkeit von ihrer Höhe in den Piezzo-Sensoren 12 Spannungen U, die über das elektrische Leitungssystem 13 zunächst an die Verstärkereinheit 14 übermittelt werden. Aus diesen Spannungen U generiert die Verstärkereinheit 14 schnittkraftproportionale Eingangssignale Xe einer Steuer- und Auswerteinheit 20. In an sich bekannter und deshalb nicht näher dargestellter Weise werden an die Steuer- und Auswerteinheit 20 zudem ein die Vorschubgeschwindigkeit v des Bearbeitungswerkzeuges 7 repräsentierendes Signal Xv und ein die Bearbeitungszeit repräsentierendes Signal Xt übertragen. Mit diesen an die Steuer- und Auswerteinheit 20 übertragenen Eingangssignalen Xe, Xv, Xt kann durch eine in der Steuer- und Auswerteinheit 20 hinterlegte Software nunmehr in erfindungsgemäßer Weise die Strecke S bestimmt werden auf welcher dem Bearbeitungswerkzeug 7 während seiner Vorschubbewegung in den zu bearbeitenden Gegenstand 15 ein von diesem Gegenstand 15 erzeugter Widerstand F entgegengesetzt wird. Die von der Steuer- und Auswerteinheit 20 ermittelte Strecke S wird als Ausgangssignal Y von der Steuer- und Auswerteinrichtung 20 nachfolgenden, noch näher zu erläuternden Prozessen zur Verfügung gestellt. Das eine oder die mehreren Ausgangssignale Y bilden somit das wenigstens eine Eindringtiefensignal Y1 und/oder das zumindest eine Materialdickensignal Y2.

Ein weiterer Prozess, dem die Ausgangssignale Y von der Steuer- und Auswerfeinheit zur Verfügung gestellt werden wäre beispielsweise die Visualisierung des generierten Eindringtiefensignals Y1 oder des Materialdickensignals Y2. Eine besonders einfache Form der Visualisierung ergibt sich dann, wenn gemäß Figur 1 die von der Steuer- und Auswerteinheit 20 generierten Ausgangssignale Y eine an sich bekannte Druck- oder Farbspritzmaschine 21 ansteuern, die im Bereich der durch den Bohrer 6 erzeugten Bohrung 22 eine Markierung 23 anbringt, die zum Beispiel explizit die Bohrtiefe oder die Materialdicke angibt.

Es liegt im Rahmen der Erfindung, dass die beschriebene Bohreinheit 1 durch eine beliebige spanabhebende oder span lose Bearbeitungsmaschine 2 ersetz sein kann, die in der Lage ist in einen zu bearbeitenden Gegenstand 15 Vertiefungen oder Durchgangsbohrungen einzubringen wie dies etwa bei einer nicht dargestellten Fräseinheit der Fall wäre.

Eine bevorzugte Anwendung des erfindungsgemäßen Verfahrens bildet das Durchbohren von solchem Verbundmaterial 16, welches im Wesentlichen aus Kohlefaserplatten 17, 19 und Klebeschichten 18 besteht, da Kohlefaserplatten 17, 19 und ausgehärtete Klebmaterialien 18 in der Regel erheblich schwankende Materialdicken aufweisen, sodass die ermittelten Eindringtiefen oder Materialdicken in ein und dem selben Werkstück 15 erheblich voneinander abweichen können.

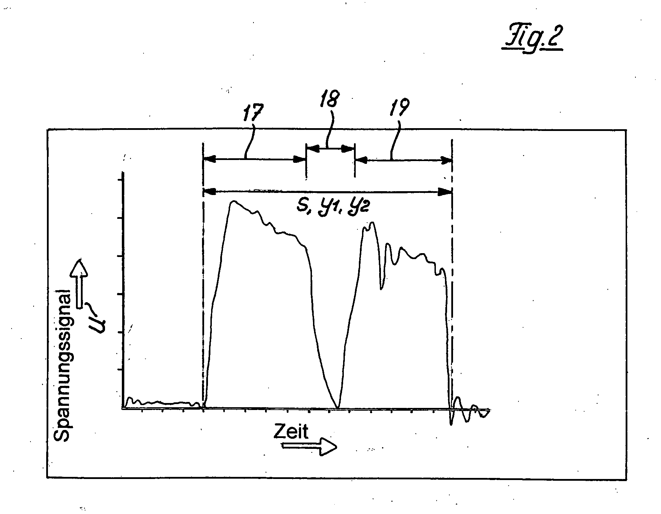

Gemäß Figur 2 generieren die Piezzo-Sensoren 12 in Abhängigkeit von der von dem Bearbeitungswerkzeug 7 durchdrungenen Materialschicht 17-19 unterschiedliche Spannungssignale U, wobei höhere Spannungssignale U härtere Materialschichten 17-19 darstellen. Erfindungsgemäß kann die Steuer- und Auswerteinheit 20 aus dem ermittelten Spannungssignalverlauf U unmittelbar ein Eindringtiefensignal Y1 oder eine Materialdickensignal Y2 generieren. Dabei berücksichtigt die Software der Steuerund Auswerteinheit 20 den Umstand, dass die beim Abtragen von Material auftretenden Belastungen erheblich über solchen Belastungen liegen, die allein durch Reibung des Bearbeitungswerkzeugs 7 an den Wänden der vom Bohrer 6 geschaffenen Bohrung 22 hervorgerufen werden.

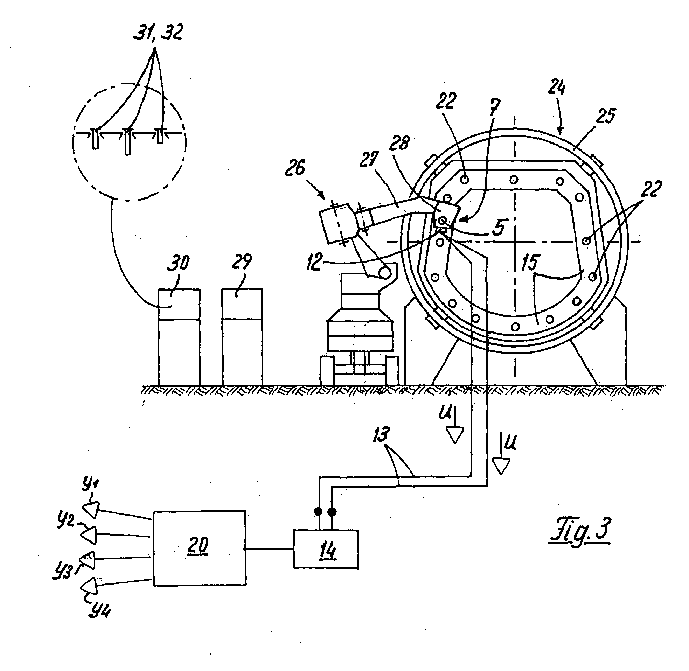

Gemäß Figur 3 kann das erfindungsgemäße Verfahren beispielsweise in einer Bearbeitungs- und Montagezelle 24 eingesetzt werden. Die nur schematisch dargestellte Bearbeitungs- und Montagezelle 24 wird im dargestellten Ausführungsbeispiel von einem in verschiedenen Ebenen verschwenkbaren Bauteilträger 25 gebildet. Der Bauteilträger 25 nimmt beliebig geformte zu bearbeitende Gegenstände 15 auf. Weiter ist der Bearbeitungs- und Montagezelle 24 ein in verschiedenen Ebenen bewegbarer Bearbeitungs- und Montageroboter 26 zugeordnet, dessen Greifarm 27 an seinem obenseitigen Ende ein an sich bekanntes Anschlussstück 28 aufnimmt. In einem ersten Arbeitsgang ist diesem Anschlussstück 28 ein Spannfutter 5 zugeordnet, welches aus einem Vorratsmagazin 29 verschiedene als Bohrer 6 ausgeführte Bearbeitungswerkzeuge 7 entnehmen kann. Das jeweilige Bearbeitungswerkzeug 7 bringt zunächst in die zu bearbeitenden Gegenstände 15 Bohrungen 22 ein. Während dieses Bohrvorganges zeichnet die erfindungsgemäße Steuer- und Auswerteinheit 20, wie bereits beschrieben, die von den Piezzo-Sensoren 12 generierten Spannungssignale U auf, die letztlich in der Steuer- und Auswerteinheit 20 die beschriebenen Eindringtiefensignale Y1 oder Materialdickensignale Y2 generieren.

Neben dem Vorratsmagazin 29 zur Bevorratung verschiedener Bearbeitungswerkzeuge 7 kann der Bearbeitungs- und Montagezelle 24 zudem ein weiteres Vorratsmagazin 30 zur Bevorratung von Verbindungselementen 31 wie beispielsweise verschieden lange Nieten 32 zugeordnet sein. In einer weiteren vorteilhaften Ausgestaltung der Erfindung kann die Steuerund Auswerteinheit 20 des Bearbeitungswerkzeuges 7 so mit der an sich bekannten und deshalb nicht näher dargestellten Steuerung des Bearbeitungs- und Montageroboters 26 verknüpft sein, dass der Greifarm 27 des Bearbeitungs- und Montageroboters 26 aus dem Vorratsmagazin 30 für die Befestigungselemente 31 diejenigen Niete 32 herausgreift, deren Schaftlänge L der ermittelten Eindringtiefe Y1 oder Materialdicke Y2 entspricht oder am nächsten kommt, sodass sichergestellt wird, dass die Masse des jeweiligen Verbindungselementes 31 niedrig bleibt. In einem weiteren Arbeitsgang verbindet der Greifarm 27 schließlich mittels des auf die jeweilige Materialdicke abgestimmten Verbindungselements 31 die miteinander zu verbindenden, im Bauteilträger 25 fixierten Bauteile 15.

In einer weiteren vorteilhaften Ausgestaltung kann das von den Piezzo-Sensoren 12 generierte Spannungssignal U in der Steuer- und Auswerteinheit 20 zur Ermittlung des Verschleißes des Bearbeitungswerkzeugs 7 herangezogen werden. Im einfachsten Fall generiert die Steuer- und Auswerteinheit 20 ein Verschleißsignal Y3 was entweder dem Bediener den Verschleiß des Bearbeitungswerkzeugs 7 akustisch oder visuell anzeigt. Beim Einsatz in der beschriebenen Bearbeitungs- und Montagezelle 24 kann das generierte Verschleißsignal Y3 auch unmittelbar auf den Greifarm 27 in der Weise einwirken, dass der Greifarm 27 selbsttätig das verschlissenen Bearbeitungswerkzeug 7 durch ein im Vorratsmagazin 29 befindliches nicht verschlissenes Bearbeitungswerkzeug 7 auswechselt.

Weiter kann die Steuer- und Auswerteinheit 20 aus den Spannungssignalen U Geschwindigkeitssignale Y4 generieren, die die Vorschubgeschwindigkeit v oder die Drehzahl n des Bearbeitungswerkzeugs 7 bestimmen. Dies hat vor allem den Vorteil, dass die Schnittgeschwindigkeit des Bearbeitungswerkzeugs 7 optimal an die jeweilige Materialschicht 17-19 angepasst werden kann.

### Bezugszeichenliste

- 1: Bohreinheit
- 2: Bearbeitungsmaschine
- 3: Gehäuse
- 4: Antriebsmotor
- 5: Spannfutter
- 6: Bohrer
- 7: Bearbeitungswerkzeug
- 8: Flanschfläche
- 9: Schraubverbindung
- 10: Führungsschlitten
- 11: Führungsbahn
- 12: Piezzo-Sensor
- 13: Leitungssystem
- 14: Signalverstärkereinheit
- 15: zu bearbeitender Gegenstand
- 16: Verbundmaterial
- 17: Materialschicht
- 18: Materialschicht
- 19: Materialschicht
- 20: Steuer- und Auswerteinheit
- 21: Druck- oder Farbspritzmaschine
- 22: Bohrung
- 23: Markierung
- 24: Bearbeitungs- und Montagezelle
- 25: Bauteilträger
- 26: Bearbeit.- und Montageroboter
- 27: Greifarm
- 28: Anschlussstück
- 29: Vorratsmagazin
- 30: Vorratsmagazin
- 31: Verbindungselement
- 32: Niete

- A: Pfeilrichtung
- F: Widerstand
- L: Schaftlänge
- S: Strecke
- U: Spannungssignal
- Xe: Eingangssignal
- Xv: Geschwindigkeitssignal
- Xt: Zeitsignal
- Y: Ausgangssignal
- Y1: Eindringtiefensignal
- Y2: Materialdickensignal
- Y3: Verschleißsignal
- Y4: Geschwindigkeitssignal
- n: Drehzahl
- v: Vorschubgeschwindigkeit

## Patentansprüche

1. Verfahren zur Ermittlung der Tiefe einer Bohrung in Gegenständen,
**dadurch gekennzeichnet,**
**dass** die Strecke gemessen wird, auf welcher einem Bearbeitungswerkzeug (7) während seiner Vorschubbewegung in den zu bearbeitenden Gegenstand (15) ein von diesem erzeugter Widerstand (F) entgegengesetzt wird.

2. Verfahren nach Anspruch 1,
**dadurch gekennzeichnet,**
**dass** die ermittelte Strecke zur Generierung zumindest eines Eindringtiefensignals (Y1) und/oder zumindest eines Materialdickensignal (Y2) verwendet wird.

3. Verfahren nach einem oder mehreren der vorhergehenden Ansprüche,
**dadurch gekennzeichnet,**
**dass** das zumindest eine Eindringtiefensignal (Y1) und/oder das wenigstens eine Materialdickensignal (Y2) als Eingangssignal (Y) für weitere Prozesse zur Verfügung steht.

4. Vorrichtung nach Anspruch 3,
**dadurch gekennzeichnet,**
**dass** ein weiterer Prozess die Visualisierung des generierten Eindringtiefensignals (Y1) und/oder Materialdickensignals (Y2) umfasst.

5. Verfahren nach Anspruch 4,
**dadurch gekennzeichnet,**
**dass** die Visualisierung eine druck- oder spritztechnisch (21) auf dem zu bearbeitenden Gegenstand (15) erzeugte Markierung (23) ist.

6. Verfahren nach einem oder mehreren der vorhergehenden Ansprüche,
**dadurch gekennzeichnet,**
**dass** das Bearbeitungswerkzeug (7) ein spanabhebendes oder ein spanloses Werkzeug ist.

7. Verfahren nach Anspruch 6,
**dadurch gekennzeichnet,**
**dass** das Bearbeitungswerkzeug (7) als Bohrer (6) oder Fräser ausgeführt ist.

8. Verfahren nach einem oder mehreren der vorhergehenden Ansprüche,
**dadurch gekennzeichnet,**
**dass** der zu bearbeitende Gegenstand (15) als Materialverbund (16) ausgeführt ist und der Materialverbund (16) aus metallischen und/oder nichtmetallischen Schichten (17-19) besteht.

9. Verfahren nach Anspruch 8,
**dadurch gekennzeichnet,**
**dass** der Materialverbund (16) aus wenigstens zwei miteinander durch Klebematerial (18) fixierte Kohlefaserplatten (17, 19) besteht.

10. Verfahren nach einem oder mehreren der vorhergehenden Ansprüche,
**dadurch gekennzeichnet,**
**dass** Belastungsschwankungen (F) innerhalb der in etwa vorbestimmbaren Strecke, den das Bearbeitungswerkzeug (7) während seiner Vorschubbewegung durch den zu bearbeitenden Gegenstand (15) bzw. durch den Materialverbund (16) zurücklegt unberücksichtigt bleiben.

11. Verfahren nach einem oder mehreren der Ansprüche 1 bis 10,
**dadurch gekennzeichnet,**
**dass** das generierte Eindringtiefensignal (Y1) und/oder Materialdickensignal (Y2) zur Auswahl eines oder mehrerer Verbindungselemente (31, 32) herangezogen wird.

12. Verfahren nach Anspruch 11,
**dadurch gekennzeichnet,**
**dass** das Verbindungselement (31) ein Niet (32) mit entsprechend der ermittelten Eindringtiefe (Y1) und/oder Materialdicke (Y2) gewählter Nietschaftlänge (L) ist.

13. Verfahren nach einem oder mehreren der Ansprüche 1 bis 12,
**dadurch gekennzeichnet,**
**dass** die gemessene Strecke unter Berücksichtigung der dem Bearbeitungswerkzeug (7) während dieser Wegstrecke entgegengesetzten Widerstand (F) ein dem Verschleiß des Bearbeitungswerkzeuges (7) entsprechendes Verschleißsignal (Y3) generiert.

14. Verfahren nach einem oder mehreren der Ansprüche 1 bis 13,
**dadurch gekennzeichnet,**
**dass** aufgrund des zurückgelegten Weges und aufgrund der dem Bearbeitungswerkzeug (7) dabei entgegengesetzten Widerstand (F) ein die Vorschubgeschwindigkeit (v) oder die Drehzahl (n) des Bearbeitungswerkzeuges (7) bestimmendes Geschwindigkeitssignal (Y4) generiert wird.

15. Verfahren nach einem oder mehreren der Ansprüche 1 bis 14,
**dadurch gekennzeichnet,**
**dass** zur Messung der Wegstrecke Piezzo-Sensoren (12) eingesetzt werden.

16. Vorrichtung zur Durchführung des Verfahrens nach einem oder mehreren der vorhergehenden Ansprüche,
**dadurch gekennzeichnet,**
**dass** eine Bearbeitungsmaschine (2) unter Zwischenlage von Sensoren (12) auf einem Führungsschlitten (10) montiert ist, welcher auf wenigstens einer Führungsbahn (11) verschiebbar geführt wird und wobei den Sensoren (12) eine Signalverstärkungseinheit (14) sowie eine Steuer- und Auswerteinheit (20) in der Weise zugeordnet sind, dass die von den Sensoren (12) generierten Spannungssignale (U) die Eingangssignale (Xe) der Steuer- und Auswerteinheit (20) bilden.

17. Vorrichtung zur Durchführung des Verfahrens nach einem oder mehreren der vorhergehenden Ansprüche,
**dadurch gekennzeichnet,**
**dass** die zumindest ein Bearbeitungswerkzeug (7) aufnehmende Bearbeitungsmaschine (2) einem Bearbeitungs- und Montageroboter (26) zugeordnet ist und die Steuer- und Auswerteinheit (20) Ausgangssignale (Y, Y1-Y4) generiert, die eine selbsttätige Entnahme von Verbindungselementen (31) und/oder Bearbeitungswerkzeugen (7) aus Vorratsmagazinen (29, 30) zulässt.
